# EUROPEAN PATENT APPLICATION

(11) **EP 4 679 245 A1**
(43) Date of publication of application: **14.01.2026**
(21) Application number: 24769783.2
(22) Date of filing: 04.03.2024
(51) Int. Cl.: G06F 3/0482

(54) **SPECIAL EFFECT INFORMATION DISPLAY METHOD AND APPARATUS, ELECTRONIC DEVICE, AND STORAGE MEDIUM**

(30) Priority: 10.03.2023 CN 202310263680
(71) Applicant: Beijing Zitiao Network Technology Co., Ltd., Beijing 100190 (CN)
(72) Inventor: LIAO, Siran, Beijing 100028 (CN); YU, Shiyun, Beijing 100028 (CN); YANG, Jie, Beijing 100028 (CN); LEI, Hechao, Beijing 100028 (CN); LI, Yu, Beijing 100028 (CN); CHEN, Kewei, Beijing 100028 (CN)
(74) Representative: Marks & Clerk LLP
(86) International application number: PCT/CN2024/079937
(87) International publication number: WO 2024/188089

(57) **Abstract**

Provided in examples of the disclosure are a method and apparatus for displaying effect information, an electronic device and a storage medium. The method includes: determining, in response to a viewing trigger operation for effect items, a plurality of types of effect items corresponding to the viewing trigger operation; and obtaining an effect tag corresponding to each type of effect item, and displaying the effect tag, where a tag display mode of the effect tag is associated with an effect action position of the effect item corresponding to the effect tag in an effect application image. According to the technical solution of the example, the effect of representing the effect action position of the corresponding effect item in the image by materializing an arrangement of the effect tags is implemented. Advantageously, a user can understand the effect action position and an effect display effect of the corresponding effect item in the image in a process of browsing the effect tags, so as to quickly search for the effect item, improve efficiency of effect production, and improve user experience of the effect production.

## Description

### CROSS-REFERENCE TO RELATED APPLICATION(S)

The present application claims the priority to Chinese Patent Application No. 202310263680.5, filed on March 10, 2023 and entitled "Method and apparatus for displaying effect information, electronic device and storage medium", which is incorporated in its entirety herein by reference.

### FIELD

Examples of the disclosure relate to the technical field of human-computer interaction, and in particular to a method and apparatus, an electronic device and a storage medium for displaying effect information.

### BACKGROUND

Application of effects grows popular among users in a scene of image processing or video production. Typically, an effect production tool includes a vast number of information for producing the effects, such as components for adding various effect items included in the effect production tool.

In the related technologies, the effect items are often displayed in a form of common text, and the users cannot quickly perceive differences between different effect items by reading the text. Especially in a case of involving a wide range of effect items, since it is difficult for the users to rapidly locate an effect item to be used, search time for the effect item is prolonged, and efficiency of effect production is reduced. Thus, user experience of the effect production is affected.

### SUMMARY

The disclosure provides a method and apparatus, an electronic device and a storage medium for displaying effect information, to achieve the effect of representing an effect action position of a corresponding effect item in an image by materializing an arrangement of effect tags, further help a user understand the effect action position and an effect display effect of the corresponding effect item in the image in a process of browsing the effect tags, and improve experience of using application software by the user.

In a first aspect, a method for displaying effect information is provided in an example of the disclosure. The method includes:
determining, in response to a viewing trigger operation for effect items, a plurality of types of effect items corresponding to the viewing trigger operation; and
obtaining an effect tag corresponding to each type of effect item, and displaying the effect tag, where a tag display mode of the effect tag is associated with an effect action position of the effect item corresponding to the effect tag in an effect application image.

In a second aspect, an apparatus for displaying effect information is provided in an example of the disclosure. The apparatus includes:
an effect item determination module, configured to determine, in response to a viewing trigger operation for an effect item, a plurality of types of effect items corresponding to the viewing trigger operation; and
an effect tag display module, configured to obtain an effect tag corresponding to each type of the effect item, and display the effect tag, and a tag display mode of the effect tag is associated with an effect action position of effect item corresponding to the effect tag in an effect application image.

In a third aspect, an electronic device is further provided in an example of the disclosure. The electronic device includes:
one or more processors; and
a storage apparatus, configured to store one or more programs,
when the one or more programs are executed by the one or more processors, the one or more processors are caused to perform the method for displaying effect information according to any example of the disclosure.

In a fourth aspect, a storage medium including computer-executable instructions is further provided in an example of the disclosure. When the computer-executable instructions executed by a computer processor, causing the computer processor to execute the method for displaying effect information according to any example of the disclosure.

### BRIEF DESCRIPTION OF THE DRAWINGS

The above and other features, advantages and aspects of each example of the disclosure will become more apparent in combination with the accompanying drawings and with reference to the following particular embodiments. Throughout the accompanying drawings, the same or similar reference numerals denote the same or similar elements. It should be understood that the accompanying drawings are schematic, and components and elements are not necessarily drawn to the actual scale.
FIG. 1 is a schematic flow diagram of a method for displaying effect information according to an example of the disclosure;
FIG. 2 is a schematic flow diagram of a method for displaying effect information according to an example of the disclosure;
FIG. 3 is a schematic flow diagram of a method for displaying effect information according to an example of the disclosure;
FIG. 4 is a schematic diagram showing a tag display form of an effect tag according to an example of the disclosure;
FIG. 5 is a schematic structural diagram of an apparatus for displaying effect information according to an example of the disclosure; and
FIG. 6 is a schematic structural diagram of an electronic device according to an example of the disclosure.

### DETAILED DESCRIPTION OF EMBODIMENTS

The examples of the disclosure will be described in more detail below with reference to the accompanying drawings. Although some examples of the disclosure are shown in the accompanying drawings, it should be understood that the disclosure can be implemented in various forms and should not be construed to be limited to the examples described herein. On the contrary, these examples are provided for more thorough and complete understanding of the disclosure. It should be understood that the accompanying drawings and examples of the disclosure are merely for illustrative purposes and are not intended to limit the scope of protection of the disclosure.

It should be understood that various steps described in the method embodiments of the disclosure can be executed in different orders and/or in parallel. In addition, the method embodiment may include additional steps and/or steps shown to omit execution. The scope of the disclosure is not limited in this regard.

The terms "comprise" and "include" and their variations used herein are open-ended, meaning "comprise, but not limited to" and "include, but not limited to". The term "based on" is "at least partially based on". The term "an example" denotes "at least an example"; the term "another example" denotes "at least one another example"; and the term "some examples" denotes "at least some examples". Related definitions of other terms will be provided in the following description.

It should be noted that the concepts such as "first" and "second" mentioned in the disclosure are merely intended to distinguish different apparatuses, modules or units, and are not intended to define the order or interdependence of the functions executed by these apparatuses, modules or units.

It should be noted that the modification of "a", "an", "the" and "plurality" mentioned in the disclosure is illustrative rather than limiting, and those skilled in the art should understand that "one or more" should be understood unless explicitly stated otherwise in the context.

The names of messages or information exchanged between a plurality of apparatuses in the embodiments of the disclosure are merely for illustrative purposes, and are not intended to limit the scope of these messages or information.

It can be understood that before the technical solution disclosed in each example of the disclosure is used, a user should be informed of the type, use scope, use scene, etc. of personal information involved in the disclosure in an appropriate mode according to relevant laws and regulations, and authorization from the user should be obtained.

For example, in response to reception of an active request of the user, prompt information is sent to the user to explicitly prompt the user that an operation requested to be executed by the user requires acquisition and use of the personal information of the user. Thus, the user may autonomously select whether to provide the personal information to software or hardware, such as an electronic device, an application, a server or a storage medium, which execute operations of the technical solution of the disclosure according to the prompt information.

As an alternative but non-limiting implementation, in response to reception of the active request of the user, a mode of sending the prompt information to the user may be, for example, a mode of a pop-up window, and the prompt information may be presented in a text mode in the pop-up window. In addition, the pop-up window may further carry a selection control for the user to select "agree" or "disagree" to provide the personal information to the electronic device.

It can be understood that the above processes of notification and user authorization acquisition are merely illustrative, and do not constitute limitations to the implementation of the disclosure, and other modes satisfying relevant laws and regulations may also be applied to the implementation of the disclosure.

It can be understood that data (including, but not limited to, data itself, and data acquisition or use) involved in the technical solution should comply with the requirements of corresponding laws, regulations and relevant provisions.

Before the technical solution is introduced, an application scene may be illustratively described firstly. The technical solution may be applied to any scene in which a plurality of types of effect information are displayed. Illustratively, a plurality of types of effect items corresponding to a trigger operation may be determined when the viewing trigger operation for effect items is detected. Further, effect tags corresponding to the effect items are obtained and displayed on a display interface. Existing effect tag display modes are all to arrange the effect tags according to a heat parameter, a click degree parameter or a user preference parameter of the corresponding effect item, such that a user may not understand an effect action position and an effect display effect of the corresponding effect item in an image when browsing the effect tags. In this case, based on the technical solution implemented by the disclosure, a tag display mode of the corresponding effect tag on the display interface may be determined according to an effect action position of the effect item in the image, so as to display the effect tag based on the tag display mode. Thus, the effect of representing the effect action position of the corresponding effect item in the image by materializing an arrangement of effect tags is implemented. Moreover, an effect action position relation when different effect items are applied may be presented by means of the arrangement of the effect tags. Furthermore, the user understands the effect action position and the effect display effect of the corresponding effect item in the image advantageously in a process of browsing the effect tags.

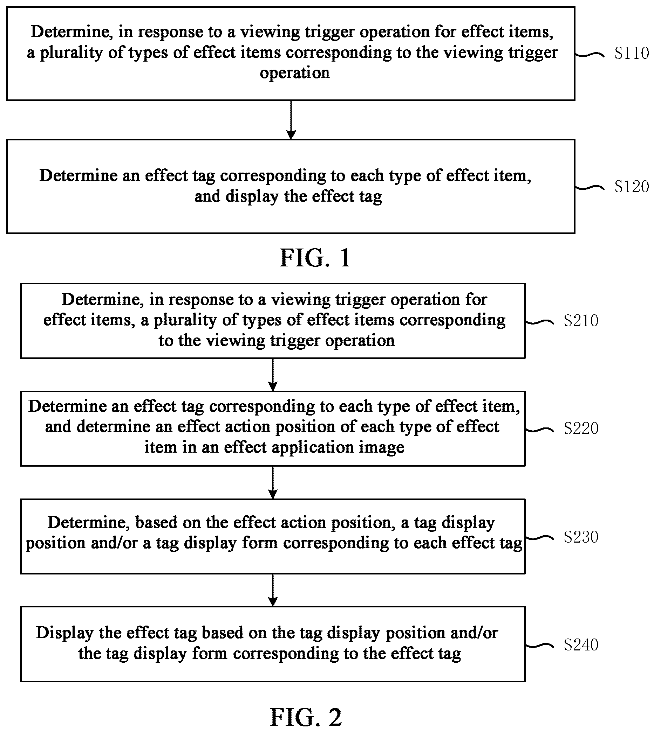

FIG. 1 is a schematic flow diagram of a method for displaying effect information according to an example of the disclosure. The example of the disclosure is applicable to a case in which effect tags of a plurality of types of effect items are displayed in a display interface. The method may be executed by an apparatus for displaying effect information. The apparatus may be implemented in a form of software and/or hardware. Alternatively, the apparatus may be implemented by means of an electronic device. The electronic device may be a mobile terminal, a personal computer (PC) terminal or a server.

As shown in FIG. 1, the method includes:
S110, a plurality of types of effect items corresponding to a viewing trigger operation are determined in response to the viewing trigger operation for effect items.

It should be noted that the technical solution according to the example of the disclosure may be applied to a scene in which effect information is displayed. For example, the technical solution may be integrated into any application software capable of displaying the effect information. Moreover, the software may be installed in the electronic device. Alternatively, the electronic device may be the mobile terminal or the PC terminal. The application software may be a type of software having an effect information display function, and specific application software of the technical solution will not be repeated one to one herein, as long as an effect display function may be implemented. The application software may be further a specially developed application. The specially developed application may be integrated into software for displaying effect information, or integrated into a corresponding page. A user may display the effect information by means of a page integrated in the terminal.

The effect items may be effect props added into an image or a video to make the image or the video present the effect display effect. Alternatively, the effect items may be classified according to action objects corresponding to the effect items, and may include a background effect, a facial effect, a pet effect, an augmented reality (AR) tracking effect, a 3D effect, an environment effect and a foreground effect.

In the example, a control for triggering viewing of the effect items may be pre developed, and alternatively, program codes for triggering viewing of the effect items may be preset. When the control for triggering is detected or the program codes are received, a response may be made to the viewing trigger operation, such that the plurality of types of effect items corresponding to the viewing trigger operation are determined.

It should be noted that the plurality of types of effect items may be pre developed and associated with the control for triggering viewing, such that when it is detected that the user triggers a corresponding effect item viewing control, the plurality of types of effect items corresponding to the trigger operation may be determined according to a predetermined association relation.

It should be further noted that different types of effect items may correspond to different effect action positions in the same image or the same video. That is, the plurality of types of effect items may include a plurality of effect props acting on different objects included in the image or the video. It should be noted that each type of effect item may include one or more effect props acting on different objects included in the image or the video.

In practical application, when it is detected that the user triggers the effect item viewing control, a response may be made to the viewing trigger operation to determine the plurality of types of effect items corresponding to the trigger operation.

S120, an effect tag corresponding to each type of effect item is obtained, and the effect tag is displayed.

In the example, the effect tags may be tags for graphically displaying the corresponding effect items. Each effect tag may include a text tag and a corresponding graphic tag. The text tag may be a name of the effect item, and the graphic tag may be a schematic action effect diagram corresponding to the effect item. The effect tags may be any type of tags, and alternatively, may be in a form of cards having preset shapes. Illustratively, the effect tags may be in a form of right-angled or rounded rectangular cards in an expanded display state.

It should be noted that a schematic default effect display effect diagram corresponding to each effect item may be predetermined, and each schematic default effect display effect diagram may be displayed as the graphic label of the corresponding effect tag.

In the example, the action effect corresponding to each type of effect item may be predetermined, the corresponding schematic action effect diagram is produced according to the action effect, and the schematic action effect diagram is associated with each type of effect item. Further, the corresponding effect tag may be produced according to the name of each type of effect item and the corresponding schematic action effect diagram. Further, the effect tag is associated with the effect item. Moreover, the effect tag is stored into a material library of a terminal device, such that when the plurality of types of effect items corresponding to the viewing trigger operation are determined, the corresponding effect tag may be retrieved from the material library according to each type of effect item, and the retrieved effect tag is displayed on a display interface of the terminal device.

A tag display mode of the effect tag is associated with the effect action position of the effect item corresponding to the effect tag in the effect application image.

In the example, the effect application image may be an image requiring effect processing, or may be understood as an image to which the effect item may be applied. The effect action position may be an addition position of the effect item in the effect application image. Alternatively, the effect action position may include an effect display depth and an effect display position. The effect display depth may be a distance between a position at which the effect item is applied in the effect application image and a photographing point (i.e. a camera). Illustratively, if the effect application image is an image of a user holding a pet, the user may be taken as an intermediate point, and an image area at a rear of the user may be a background area. If the effect item is applied to the area, the effect display depth corresponding to the effect item is relatively deep. The image area at a front side of the user, i.e. an area in which the pet is located, may be a foreground area. If the effect item is applied to the area, the effect display depth corresponding to the effect item is relatively shallow. The effect display position may be a corresponding display position when the effect item is applied in the effect application image. Alternatively, the effect display position may include a left side of the image, a right side of the image, an upper side of the image, and a lower side of the image.

In a practical application, when the plurality of effect tags are displayed on the display interface, the effect tags may be displayed in a predetermined display sequence. Moreover, the display sequence may be associated with the effect action position of the effect item corresponding to the effect tag in the effect application image. Specifically, if the effect action position is the effect display depth, the effect display depth of the effect item corresponding to each effect tag when applied to the effect application image may be determined after the plurality of effect tags are obtained, the effect display depths are arranged in a sequence from deep to shallow or from shallow to deep, and the display positions of the corresponding effect tags in the display interface are determined based on the arrangement sequence, so as to display the corresponding effect tags based on the display positions. Alternatively, if the effect action position is the effect display position, the corresponding display position when the effect item corresponding to each effect tag is applied to the effect application image may be determined after the plurality of effect tags are obtained, the display positions are arranged in a sequence from left to right, from right to left, from top to bottom, or from bottom to top, and the display position of the corresponding effect tag in the display interface is determined based on the arrangement sequence, so as to display the corresponding effect tags based on the display positions.

It should be noted that when the effect tag is displayed on the display interface, the effect tag may correspond to a plurality of display forms. Alternatively, the display forms may include vertical display or horizontal display.

According to the technical solution of the example of the disclosure, the plurality of types of effect items corresponding to the viewing trigger operation are determined in response to the viewing trigger operation for the effect items. Further, the effect tag corresponding to each type of effect item is obtained, and the effect tag is displayed. Thus, the problems that in the prior art, since the users cannot quickly perceive differences between different effect items by reading the text, and especially in a case of involving a wide range of effect items, it is difficult for the users to rapidly locate an effect item to be used, search time for the effect item is prolonged and efficiency of effect production is reduced are solved, and the effect of representing the effect action position of the corresponding effect item in the image by materializing an arrangement of the effect tags is implemented. Moreover, an effect action position relation when different effect items are applied can be presented by means of the arrangement of the effect tags. Moreover, the user understands the effect action position and the effect display effect of the corresponding effect item in the image advantageously in a process of browsing the effect tags, so as to quickly search for the effect items, improve efficiency of effect production, and improve experience of using application software by the user.

FIG. 2 is a schematic flow diagram of a method for displaying effect information according to an example of the disclosure. Based on the above example, an effect action position of each type of effect item in an effect application image may be determined, so as to determine a tag display mode of a corresponding effect tag based on the effect action position and display the corresponding effect tag based on the tag display mode. For the particular embodiment of the example, reference may be made to the technical solution of the example. The technical terms that are the same as or correspond to those of the above example will not be repeated herein.

As shown in FIG. 2, the method specifically includes:
S210, a plurality of types of effect items corresponding to a viewing trigger operation are determined in response to the viewing trigger operation for effect items.
S220, an effect tag corresponding to each type of effect item is obtained, and an effect action position of each type of effect item in an effect application image is determined.

In the example, the effect action position of each type of effect item when acting on the effect application image may be determined after the effect tag corresponding to each type of effect item is obtained.

In practical application, the step that determining an effect action position of each type of effect item in an effect application image may include at least two methods. The two methods may be described below separately.

One method may be as follows: the step that determining an effect action position of each type of effect item in an effect application image includes: for each type of effect item, an effect action object corresponding to the effect item is determined, and an action object position of the effect action object in the effect application image is determined; and an effect action position when the effect item is applied to the effect application image is determined based on the action object position corresponding to the effect action object.

In the example, the effect action object may be an object to which the effect item is added. That is, after the effect item is added, an object whose an effect is the same as an effect display effect corresponding to the effect item is displayed. For example, if the effect item is a background effect, the effect action object corresponding to the background effect is an image background area. If the effect item is a facial effect, the effect action object corresponding to the facial effect is a user facial area. If the effect item is a pet effect, the effect action object corresponding to the pet effect is a pet. If the effect item is an AR tracking effect, the effect action object corresponding to the AR tracking effect is a user limb trunk. Correspondingly, the action object position may be a display position of the effect action object in the effect application image.

In practical application, when the effect action position of each type of effect item in the effect application image is determined, for each type of effect item, the effect action object corresponding to the effect item may be determined, and the display position of the effect action object in the effect application image may be determined. Further, the effect action position when the effect item is applied to the effect application image may be determined according to the display position.

Another method may be as follows: the step that determining an effect action position of each type of effect item in an effect application image includes: for each type of effect item, a spatial display position when the effect item is applied to the effect application image is determined; and the effect action position of the effect item in the effect application image is determined based on the spatial display position corresponding to the effect item.

In the example, the spatial display position may be position information of a display area of the effect item in the effect application image in image space. The spatial display position may be display position information expressed in any form, and alternatively, may be expressed in a form of spatial three-dimensional coordinates.

In practical application, when the effect action position of each type of effect item in the effect application image is determined, for each type of effect item, an effect display area when the effect item acts on the effect application image may be determined, and position information of the effect display area in the image space may be determined, to obtain the spatial display position corresponding to the effect item. Further, the effect action position of the effect item in the effect application image may be determined according to the spatial display position. Illustratively, the position information of the effect display area in the image space is taken as the spatial display position corresponding to the effect item. Further, the spatial display position corresponding to the effect item may be used as the effect action position of the effect item in the effect application image. Such a configuration is advantageous to determination of the effect action position of the effect item in the effect application image. Further, when the corresponding effect tag is arranged based on the effect action position, the effect action position of the corresponding effect item in the effect application image may be represented by means of an arrangement sequence of the effect tag, such that the user can understand the effect action position of the corresponding effect item in the effect application image advantageously in a process of browsing the effect tags.

S230, a tag display position and/or a tag display form corresponding to each effect tag is determined based on the effect action position.

In the example, the tag display position may be corresponding position information when the effect tag is displayed on the display interface. It should be noted that the tag display position may be an absolute position or a relative position. The absolute position may be understood as a fixed position and has no relation relative to tag display positions of other effect tags. Specifically, a plurality of tag display positions may be predetermined in the display interface, and each tag display position is associated with the effect action position, such that after the effect action position corresponding to each effect tag is determined, the tag display position corresponding to each effect tag may be determined according to an association relation between the effect action position and the tag display position. The relative position may be understood as a position at which the tag display position of any effect tag and the tag display positions of other effect tags have relative relations. Specifically, after the effect action position corresponding to each effect tag is determined, the effect action positions may be sorted in a predetermined tag display sequence, and the tag display position of the corresponding effect tag is determined based on the arrangement sequence. Further, the corresponding effect tag is displayed based on the tag display position. It should be noted that the absolute position is unique and constant. However, the relative position may be changed according to different application scenes accordingly.

In the example, the tag display form may be a display state or a display shape when the effect tag is displayed on the display interface. The display state may include an expanded display state or a collapsed display state; and the display shape may be a rectangular shape or a trapezoidal shape having a size slightly less than the rectangular shape.

In practical application, the effect action position may include an effect display depth, and may further include other effect display information. When the effect action position includes different information, a method for determining the tag display position corresponding to the effect action position may be different. The method for determining the tag display position may be described in detail below by taking the effect action position as the effect display depth as an example.

Alternatively, the step that a tag display position corresponding to each effect tag is determined based on the effect action position includes: position arrangement information of the tag display position corresponding to the effect tag is determined for each effect tag based on depth distribution information of the effect display depth corresponding to the effect tag.

In the example, the depth distribution information may be information representing an arrangement of the effect display depth. Alternatively, the depth distribution information may include corresponding distribution information when the effect display depths are arranged from deep to shallow, or corresponding distribution information when the effect display depths are arranged from shallow to deep. The position arrangement information may be information representing an arrangement of the effect tags.

In practical application, the effect display depth corresponding to each effect tag is sorted in a sequence from deep to shallow or from shallow to deep to obtain a depth sorting result corresponding to each effect tag; and the tag display position of the effect tag is determined for each effect tag based on the depth sorting result corresponding to the effect tag.

In the example, the effect display depth may be a distance between the display position of the effect item in the effect application image and a camera. The depth sorting result may be a result obtained by arranging each effect display depth in a preset sequence.

In particular implementation, after the effect display depth corresponding to each effect tag is determined, the effect display depths may be arranged in a sequence from deep to shallow or from shallow to deep. Further, the depth sorting result corresponding to each effect tag is determined in the arrangement sequence of each effect display depth in the effect display depths. Further, for each effect tag, the tag display position of the effect tag may be determined according to the depth sorting result corresponding to the effect tag. Such a configuration is advantageous to the user to clearly understand the action position of each effect tag in a process of acting on the effect application image when the user browses the effect tags, and use experience of the user is improved.

S240, displaying the effect tag based on the tag display position and/or the tag display form corresponding to the effect tag.

In the example, after the tag display position and/or the tag display form corresponding to each tag are/is determined, the corresponding effect tag may be displayed on the display interface according to the tag display position and/or the tag display form, such that the user may browse the plurality of effect tags displayed in the display interface. Moreover, the effect tags satisfying requirements of the user may be selected.

According to the technical solution of the example of the disclosure, the plurality of types of effect items corresponding to the viewing trigger operation are determined in response to the viewing trigger operation for the effect items. Further, the effect tag corresponding to each type of effect item is obtained, and the effect action position of each type of effect tag in the effect application image is determined. Finally, the tag display position and/or the tag display form corresponding to each effect tag are/is determined based on the effect action position. Thus, the problems that in the prior technologies, since a user cannot quickly perceive differences between different effect items by reading text, and it is difficult to rapidly locate an effect item to be used, search time for the effect items is prolonged and efficiency of effect production is reduced are solved, and the effect of representing the effect action position of the corresponding effect item in the image by materializing an arrangement of the effect tags is implemented. Moreover, an effect action position relation when different effect items are applied can be presented by means of the arrangement of the effect tags. Advantageously, the user can understand the effect action position and the effect display effect of the corresponding effect item in the image in a process of browsing the effect tags, and experience of using application software by the user is improved.

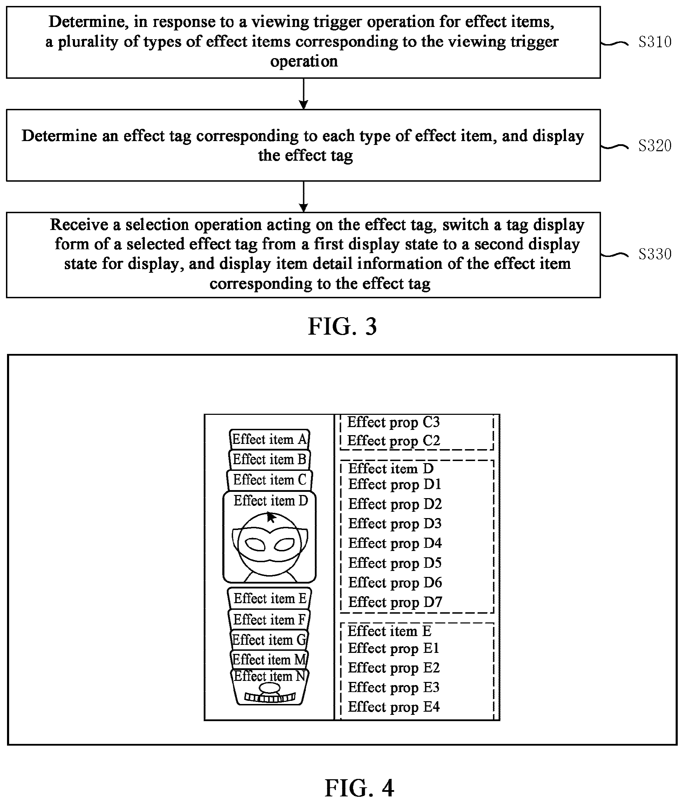

FIG. 3 is a schematic flow diagram of a method for displaying effect information according to an example of the disclosure. Based on the above example, a selection operation may be input into an effect tag to switch a tag display form of the selected effect tag and display corresponding item detail information in a corresponding area. For the particular embodiment of the example, reference may be made to the technical solution of the example. The technical terms that are the same as or corresponding to those of the above example will not be repeated herein.

As shown in FIG. 3, the method specifically includes:
S310, a plurality of types of effect items corresponding to a viewing trigger operation are determined in response to the viewing trigger operation for effect items.
S320, an effect tag corresponding to each type of effect item is obtained, and the effect tag is displayed.
S330, a selection operation acting on the effect tag is received, a tag display form of a selected effect tag is switched from a first display state to a second display state for display, and item detail information of the effect item corresponding to the effect tag is displayed.

In the example, each effect tag may be preset to a selectable state, and further, the effect tag is subsequently processed in response to the effect tag being the selected effect tag.

In practical application, the selection operation acting on the effect tag may be any operation for selecting the effect tag, for example, a click operation for the effect tag. The click operation may be a single-click operation or a multiple-click operation (for example, a double-click operation). For ease of a user operation, the selection operation acting on the effect tag may be further that when it is detected that a pause duration of a user on the effect tag based on an input device or a touch point reaches a preset duration, the effect tag may be used as the selected effect tag, and furthermore, the effect tag may be subsequently processed.

Alternatively, the step that receiving a selection operation acting on the effect tag includes: receiving a hovering operation of a cursor of the input device hovering over the effect tag. The hovering operation may be a corresponding operation when the pause duration of the cursor on a target position reaches the preset duration. It should be noted that a selection trigger area may be pre developed in the effect tag. When it is detected that the pause duration of the cursor in the selection trigger area reaches the preset duration, the hovering operation on the effect tag may be determined. Moreover, a response is made to the hovering operation, and the effect tag corresponding to the hovering operation is subsequently processed.

Alternatively, the step that receiving a selection operation acting on the effect tag includes: receiving a continuous stay operation of a touch point on the effect tag. The continuous stay operation is an operation in which a duration of continuous stay reaches a preset duration threshold.

In the example, the first display state may be a display state of the effect tag in a display interface when the effect tag is not selected. Alternatively, the first display state may be a collapsed display state, and/or the first display state may be a first shape. The second display state may be a display state of the effect tag in the display interface when the effect tag is not selected. Alternatively, the second display state may be an expanded display state, and/or the second display state may be a second shape. It should be noted that the first shape may have a size less than that of the second shape, such that the selected effect tag and the unselected effect tag may be displayed differently. Illustratively, the second shape may correspond to a display shape when the effect tag is expanded and displayed, and may be a rectangular shape. The first shape may correspond to a display shape when the effect tag is collapsed and displayed, and may be a trapezoidal shape. Moreover, the trapezoidal shape has a size less than that of the above rectangular shape.

The item detail information may be information describing details of the effects included in the effect item. For example, if the effect item is a facial effect, the item detail information corresponding to the effect item may include a facial illustration, a facial image, facial stretching, facial contraction, a mask effect, and an eye color effect.

It should be noted that an effect display effect corresponding to each item detail information may be predetermined, such that a schematic effect display effect diagram corresponding to the selected item detail information may be displayed in a graphic tag display area of the selected effect tag when the selection operation for the item detail information is detected. Thus, the user may understand the specific action position and the corresponding effect display effect of each piece of item detail information in the effect item in a process of browsing the effect tags.

It should be further noted that the item detail information of each effect item may be further obtained while the effect item of each effect type is obtained. Moreover, a corresponding detail display area may be further prearranged around the tag display position of each effect tag, such that when the selection operation of the user on any effect tag is detected, the corresponding item detail information may be displayed in the detail display area corresponding to that effect tag.

In practical application, when the hovering operation of the user based on the cursor hovering over the effect tag is detected, a response may be made to the hovering operation, and the effect tag may be used as the selected effect tag. Further, the tag display form of the effect tag may be switched from the first display state to the second display state. Moreover, the item detail information of the effect item corresponding to the effect tag is displayed in the detail display area corresponding to the effect tag. Illustratively, the item detail information of the effect item may be item introduction information or usage guidance information for the effect item. Alternatively, the item detail information of the effect item may be further one or more effect props included in the type of effect item.

As shown in FIG. 4, an effect item D is used as a selected effect tag, and may be gradually switched from a collapsed display state to an expanded display state when a mouse cursor (an arrow in the figure) moves to the effect item D and stays at the effect item D in response to effect tags of effect items (for example, an effect item A-effect item N in the figure) being displayed in a first display area of a target interface. Assuming that the mouse cursor is switched from an effect item C to the effect item D, the effect item C may be gradually switched from the expanded display state to the collapsed display state in response to the mouse cursor leaves the effect item C. For the selected effect item D, item detail information of the effect item may be further displayed. Specifically, a plurality of effect props included in the effect item D may be displayed at a display position corresponding to the effect item D in a second display area of the target interface, for example, effect props D1-D7.

The effect item D as a facial prop is taken as an example. The effect tag of the effect item D may include a text tag, such as "facial effect", and may further include an image tag of a facial effect (as shown in the figure). The effect props included in the effect item D may be a prop for a three-dimensional face, a prop for face embedding, a prop for face deformation, a prop for face beauty, a prop for a mask, a prop for eye color change, etc.

It should be noted that the effect tag starts to be gradually switched from the collapsed display state to the expanded display state when the mouse cursor moves to the effect tag. However, the display state to which the effect tag is expanded is associated with a duration of a hovering operation. That is, the expanded display state of the effect tag is related to hovering time of the mouse cursor of the effect tag. If the hovering time of the mouse cursor is not less than preset expansion time of the effect tag, the expanded display state of the effect tag may be a fully expanded display state. If the hovering time of the mouse cursor is less than the preset expansion time of the effect tag, the expanded display state of the effect tag may be a partially expanded display state.

Alternatively, the step that switching a tag display form of a selected effect tag from a first display state to a second display state for display includes: first state attribute information corresponding to the first display state of the selected effect tag and second state attribute information corresponding to the second display state of the selected effect tag are determined; and based on the first state attribute information and the second state attribute information, the tag display form of the selected effect tag is switched from the first display state to the second display state for display.

In the example, the first state attribute information may be information representing display attribute features of the first display state. Alternatively, the first state attribute information includes rotation information, translation information and size information. The rotation information may be a corresponding rotation angle when the effect tag is displayed in the display interface. Moreover, the rotation angle may be an angle during rotation around a preset point in a two-dimensional space. The rotation angle may be an angle during rotation around a preset axis in a three-dimensional space. The translation information may be corresponding display position movement information when the effect tag is displayed in the display interface. The size information may be information representing a display size of the effect tag. Correspondingly, the second state attribute information may be information representing display attribute features of the second display state. Similarly, the second state attribute information may include rotation information, translation information and size information.

In practical application, when various display parameters of the effect tags in the first display state may be preset according to the number of tags of the effect tags to be displayed and a size of a tag display area of the effect tags in the display interface, the display parameters may be taken as the first state attribute information, and an identifier corresponding to the first display state may be set for the first state attribute information. Moreover, the first state attribute information for which the identifier is set is stored into storage space of a terminal device. Similarly, when various display parameters of the effect tags in the second display state may be preset, the display parameters may be used as the second state attribute information, and an identifier corresponding to the second display state may be set for the second state attribute information. Moreover, the second state attribute information for which the identifier is set may be stored in the storage space of the terminal device.

In practical application, the selected effect tag may be an effect tag switched from an unselected state to a selected state. Moreover, a tag display form corresponding to the effect tag may correspond to the first display state when the effect tag is in the unselected state, and a tag display form corresponding to the effect tag may correspond to the second display state when the effect tag is in the selected state. Thus, when the selected effect tag is determined, the first display state and the second display state corresponding to the effect tag may be determined. Further, the first state attribute information may be obtained from the storage space according to an association relation between the first display state and the first state attribute information. Moreover, the second state attribute information may be obtained from the storage space according to an association relation between the second display state and the second state attribute information. Further, based on the first state attribute information and the second state attribute information, the tag display form of the selected effect tag may be switched from the first display state to the second display state for display. Such a configuration is advantageous to quick switch of the tag display form of the effect tag, and the tag display form of the effect tag may be switched according to a preset switching process. Further, the effect of dynamically switching the tag display form of the effect tag may be implemented in a process of browsing the plurality of effect tags by the user.

It should be noted that the tag display form of the selected effect tag is switched from the first display state to the second display state for display, which may be a dynamic and smooth state switching process. That is, the display state of the effect tag is gradually changed in a process of switching the tag display form from the first display state to the second display state. Thus, at least one intermediate display state may be further included between the first display state and the second display state. Thus, the effect of smoothly transitioning the tag display form of the selected effect tag from the first display state to the second display state may be implemented.

Alternatively, the step that based on the first state attribute information and the second state attribute information, switching the tag display form of the selected effect tag from the first display state to the second display state for display includes: one or more pieces of intermediate state attribute information are determined based on a preset animation model and the first state attribute information; and the first state attribute information is updated to the second state attribute information from the intermediate state attribute information, to switch the tag display form of the selected effect tag from the first display state to the second display state for display.

In the example, the preset animation model may be an animation model pre created and used to represent a switching process of the tag display form. In a process of switching the tag display form of the effect tag, it may be considered that the number of model vertices of the animation model corresponding to the tag display form is consistent. Different model structures are determined by adjusting a display position of each model vertex, to obtain animation models in different tag display forms of the effect tag. Each model structure in the preset animation model may correspond to the tag display form of the effect tag at different time stamps in a process of switching the tag display form. Correspondingly, model vertex information of each model structure may correspond to state attribute information in a corresponding tag display form.

In practical application, after the first state attribute information and the second state attribute information are determined, a model structure corresponding to the first state attribute information may be determined according to the preset animation model. Further, if the preset animation model represents a process of switching the effect tag from the first display state to the second display state, all model structures between the model structure and a last model structure may be determined, and the intermediate state attribute information may be determined according to the model vertex information of the model structures. If the preset animation model represents a process of switching the effect tag from the second display state to the first display state, all model structures between the model structure and a first model structure may be determined may be determined, and the intermediate state attribute information may be determined according to the model vertex information of the model structures.

It should be noted that the number of intermediate state attribute information can be one or more. If one piece of intermediate state attribute information is provided, it may be explained that the tag display form of the selected effect tag differs from the second display state by only one model structure. That is, only one frame is required to switch from the tag display form to the second display state. If more pieces of intermediate state attribute information are provided, it may be explained that the tag display form of the selected effect tag differs from the second display state by a plurality of model structures. That is, a plurality of consecutive video frames is required to switch from the tag display form to the second display state.

Furthermore, after one or more pieces of intermediate state attribute information are determined, the first state attribute information may be gradually updated to the second state attribute information according to the intermediate state attribute information, such that the tag display form of the selected effect tag may be smoothly switched from the first display state to the second display state for display. Such a setting is advantageous to the process of switching the tag display form may be displayed in the display interface in a form of animation, and further, the tag display form may be smoothly switched, thereby improving a display effect of the effect tag.

In practical application, when it is detected that the cursor moves from an area hovering over the effect tag to another area, the effect tag may be switched from the selected state to the unselected state, and moreover, the tag display form of the effect tag is also changed accordingly.

In view of this, based on each technical solution described above, the method further includes: switching the effect tag from the second display state back to the first display state in response to the effect tag being switched from a selected state to an unselected state.

In practical application, when it is detected that the cursor moves from a hovering selection trigger area of the effect tag to other areas in the display interface, the effect tag may be switched from the selected state to the unselected state. Moreover, in this case, the tag display form of the effect tag is switched from the first display state to the second display state.

In practical application, when any effect tag is in the selected state, the tag display form of the effect tag is in the second display state. Moreover, the plurality of effect tags in the display interface are displayed according to corresponding tag display positions. In order to make an arrangement relation between the selected effect tag and the unselected effect tag in the display interface more reasonable, and to present the plurality of effect tags with a spatial perspective effect, for the unselected effect tag, an effect display form corresponding to the unselected effect tag may be determined according to a distance between the effect tag and the selected effect tag.

In view of this, based on each technical solution described above, the method further includes: a target display form of the effect tag is determined for an unselected effect tag according to a distance between the effect tag and the selected effect tag, and the effect tag is displayed in the target display form.

In the example, a distance between any two effect tags may be predetermined according to each tag display position, and then a plurality of distances may be obtained by deleting overlapping distances in the distances. Further, the tag display form corresponding to each distance may be set separately. Moreover, an association relation between the distances and the tag display forms is established and stored into the storage space.

In practical application, the tag display position of the effect tag and the tag display position of the selected effect tag may be determined for the unselected effect tag after the selected effect tag is determined. Further, the distance between the effect tag and the selected effect tag may be determined according to the two tag display positions. Further, the tag display form corresponding to the distance may be determined according to the predetermined association relation, the tag display form is used as the target display form. Further, the effect tag is displayed in the target display form. Illustratively, display sizes of the effect tags located on two sides of the effect tag on the display interface may be sequentially reduced by taking the selected effect tag as a center, and displayed in a stacked mode, such that the effect that the closer the distance to the selected effect tag is, the larger the display size of the unselected effect tag on the display interface is, the farther the distance is, and the smaller the display size of the unselected effect tag on the display interface is may be presented. Such a setting is advantageous to reduction in occupied space of the plurality of effect tags in the display interface, such that the arrangement relation between the plurality of effect tags is more reasonable. Moreover, the spatial perspective effect may be formed when the plurality of effect tags are displayed in the display interface, thereby improving the display effect of the effect tags.

As shown in FIG. 4, the effect D may be gradually switched from the collapsed display state to the expanded display state when the mouse cursor (the arrow in the figure) hovers over the effect item D in response to the effect tags of the effect items being displayed in the first display area of the target interface.

According to the technical solution of the example of the disclosure, the plurality of types of effect items corresponding to the viewing trigger operation are determined in response to the viewing trigger operation for the effect items. Further, the effect tag corresponding to each type of effect item is obtained, the effect tag is displayed, the selection operation acting on the effect tag is received, the tag display form of the selected effect tag is switched from the first display state to the second display state for display, and the item detail information of the effect item corresponding to the effect tag is displayed. Thus, the problems that in the prior technologies, since the users cannot quickly perceive differences between different effect items by reading the text, and especially in a case of involving a wide range of effect items, it is difficult for the users to rapidly locate an effect item to be used, search time for the effect item is prolonged and efficiency of effect production is reduced are solved, and a process of dynamically switching the effect tag from the unselected state to the selected state is implemented, Moreover, linkage interaction between the effect tag and the item detail information is implemented. Thus, the user can further understand the item detail information of the effect item corresponding to the effect tag advantageously.

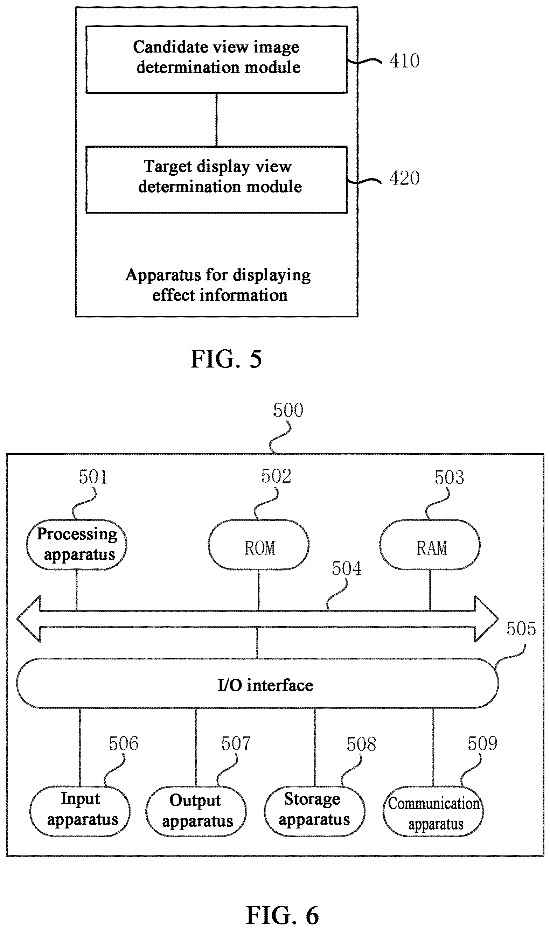

FIG. 5 is a schematic structural diagram of an apparatus for displaying effect information according to an example of the disclosure. As shown in FIG. 5, the apparatus includes: an effect item determination module 410 and an effect tag display module 420.

The effect item determination module 410 is configured to determine, in response to a viewing trigger operation for an effect item, a plurality of types of effect items corresponding to the viewing trigger operation; and the effect tag display module 420 is configured to obtain an effect tag corresponding to each type of the effect item, and display the effect tag, wherein a tag display mode of the effect tag is associated with an effect action position of effect item corresponding to the effect tag in an effect application image.

Based on each technical solution described above, the effect tag display module 420 includes: an effect action position determination unit, a tag display position determination unit and an effect tag display unit.

The effect action position determination unit is configured to determine the effect action position of each type of effect item in the effect application image;
the tag display position determination unit is configured to determine, based on the effect action position, a tag display position and/or a tag display form corresponding to each effect tag; and
the effect tag display unit is configured to display the effect tag based on the tag display position and/or the tag display form corresponding to the effect tag.

Based on each technical solution described above, the effect action position determination unit includes: a spatial display position determination subunit and an effect position determination subunit.

The spatial display position determination subunit is configured to determine, for each type of effect item, a spatial display position when the effect item is applied to the effect application image; and
the effect position determination subunit is configured to determine, based on the spatial display position corresponding to the effect item, the effect action position of the effect item in the effect application image.

Based on each technical solution described above, the effect action position includes an effect display depth; and the tag display position determination unit is specifically configured to determine, for each effect tag, position arrangement information of the tag display position corresponding to the effect tag based on depth distribution information of the effect display depth corresponding to the effect tag.

Based on each technical solution described above, the apparatus further includes: an item detail information display module.

The item detail information display module is configured to receive a selection operation acting on the effect tag, switch a tag display form of a selected effect tag from a first display state to a second display state for display, and display item detail information of the effect item corresponding to the effect tag.

Based on each technical solution described above, the item detail information display module includes: a state attribute information determination unit and a display state switching unit.

The state attribute information determination unit is configured to determine first state attribute information corresponding to the first display state of the selected effect tag and second state attribute information corresponding to the second display state of the selected effect tag; and
the display state switching unit is configured to switch, based on the first state attribute information and the second state attribute information, the tag display form of the selected effect tag from the first display state to the second display state.

Based on each technical solution described above, the display state switching unit includes: an intermediate state attribute information determination unit and a display state switching unit.

The intermediate state attribute information determination unit is configured to determine one or more pieces of intermediate state attribute information based on a preset animation model and the first state attribute information, wherein the first state attribute information includes rotation information, translation information and size information; and
the display state switching unit is configured to update the first state attribute information to the second state attribute information from the intermediate state attribute information, to switch the tag display form of the selected effect tag from the first display state to the second display state for display.

Based on each technical solution described above, the apparatus further includes: a display state switching module.

The display state switching module is configured to switch the effect tag from the second display state back to the first display state in response to the effect tag being switched from a selected state to an unselected state.

Based on each technical solution described above, the apparatus further includes: a target display state determination module.

The target display state determination module is configured to determine, for an unselected effect tag, a target display form of the effect tag according to a distance between the effect tag and the selected effect tag, and display the effect tag in the target display form.

Based on each technical solution described above, the item detail information display module includes at least one of the following units: a hovering operation reception unit, a touch stay operation reception unit and a click operation reception unit.

The hovering operation reception unit is configured to receive a hovering operation of a cursor of an input device hovering over the effect tag; the touch stay operation reception unit is configured to receive a continuous stay operation of a touch point on the effect tag, where the continuous stay operation is an operation in which a duration of continuous stay reaches a preset duration threshold; and the click operation reception unit is configured to receive a click operation for the effect tag.

Based on each technical solution described above, the first display state is a collapsed display state, and the second display state is an expanded display state; and/or the first display state is a first shape, and the second display state is a second shape.

According to the technical solution of the example of the disclosure, the plurality of types of effect items corresponding to the viewing trigger operation are determined in response to the viewing trigger operation for the effect items. Further, the effect tag corresponding to each type of effect item is obtained, and the effect tag is displayed. Thus, the problems that in the prior art, since a user cannot quickly perceive differences between different effect items by reading text, and it is difficult to rapidly locate an effect item to be used, search time for the effect items is prolonged and efficiency of effect production is reduced are solved, and the effect of representing the effect action position of the corresponding effect item in the image by materializing an arrangement of the effect tags is implemented. Moreover, an effect action position relation when different effect items are applied can be presented by means of the arrangement of the effect tags. Advantageously, the user can understand the effect action position and the effect display effect of the corresponding effect item in the image in a process of browsing the effect tags, so as to quickly search for the effect item, improve efficiency of effect production, and improve experience of using application software by the user.

The apparatus for displaying effect information according to the example of the disclosure may execute the method for displaying effect information according to any example of the disclosure, and has corresponding functional modules and beneficial effects upon execution of the method.

It is worth noting that a plurality of units and modules included in the apparatus above are merely divided according to a functional logic, but are not limited to the above division, as long as the corresponding functions can be implemented. In addition, particular names of each functional unit are merely for the convenience of mutual distinguishing and are not used to limit the scope of protection of the examples of the disclosure.

FIG. 6 is a schematic structural diagram of an electronic device according to an example of the disclosure. Reference is made to FIG. 6 showing a schematic structural diagram of an electronic device (such as a terminal device or server in FIG. 6) 500 suitable for implementing the examples of the disclosure below. The terminal device in the example of the disclosure may include, but not limited to, a mobile terminal such as a mobile phone, a notebook computer, a digital broadcast receiver, a personal digital assistant (PDA), a portable android device (PAD), a portable multimedia player (PMP) and a vehicle-mounted terminal (such as a vehicle-mounted navigation terminal), and a fixed terminal such as a digital television (TV) and a desktop computer. The electronic device shown in FIG. 6 is merely an example and should not bring any limitation to functions and the scope of use of the example of the disclosure.

As shown in FIG. 6, the electronic device 500 may include a processing apparatus (such as a central processing unit and a graphics processing unit) 501 that may execute various suitable actions and processes according to programs stored in a read only memory (ROM) 502 or programs loaded from a storage apparatus 508 into a random access memory (RAM) 503. Various programs and data required for the operation of the electronic device 500 are further stored in the RAM 503. The processing apparatus 501, the ROM 502, and the RAM 503 are connected to each other by means of a bus 504. An input/output (I/O) interface 505 is also connected to the bus 504.

Usually, the following apparatuses may be connected to the I/O interface 505: an input apparatus 506 including a touch screen, a touchpad, a keyboard, a mouse, a camera, a microphone, an accelerometer and a gyroscope, for example; an output apparatus 507 including a liquid crystal display (LCD), a speaker and a vibrator, for example; the storage apparatus 508 including a magnetic tape and a hard drive, for example; and a communication apparatus 509. The communication apparatus 509 may allow the electronic device 500 to perform wireless or wired communication with other devices to exchange data. Although FIG. 6 shows the electronic device 500 having various apparatuses, it should be understood that not all of the shown apparatuses are required to be implemented or provided. More or less apparatuses may be alternatively implemented or provided.

Specifically, according to the example of the disclosure, the process described above with reference to the flow diagram may be implemented as a computer software program. For example, the example of the disclosure includes a computer program product including a computer program carried on a non-transitory computer-readable medium. The computer program includes program codes configured to execute the method shown in the flow diagram. In such an example, the computer program may be downloaded and installed from a network via the communication apparatus 509, or installed from the storage apparatus 508, or installed from the ROM 502. When the computer program is executed by the processing apparatus 501, the above functions defined in the method of the example of the disclosure are executed.

The names of messages or information exchanged between a plurality of apparatuses in the embodiments of the disclosure are merely for illustrative purposes, and are not intended to limit the scope of these messages or information.

The electronic device provided in the example of the disclosure belongs to the same inventive concept as the method for displaying effect information according to the above example. The technical details not described in detail in the example can refer to the above example, and the example has the same beneficial effects as the above example.

A computer storage medium is provided in an example of the disclosure. The computer storage medium stores a computer program, where the program implements the method for displaying effect information according to the above example when executed by a processor.

It should be noted that the computer storage medium of the disclosure may be a computer-readable signal medium, a computer-readable storage medium, or any combination of the computer-readable signal medium and the computer-readable storage medium. The computer-readable storage medium may be, for example, but not limited to, an electronic, magnetic, optical, electromagnetic, infrared, or semiconductor system, apparatus, or device, or any suitable combination of the above. More specific examples of the computer-readable storage medium may include, but not limited to: an electrically connected and portable computer disk having one or more wires, a hard drive, an RAM, an ROM, an erasable programmable read-only memory (EPROM or a flash memory), an optical fiber, a portable compact disk read-only memory (CD-ROM), an optical storage device, a magnetic storage device, or any suitable combination of the above. In the disclosure, the computer-readable storage medium may be any tangible medium that includes or stores a program that may be used by an instruction execution system, apparatus, or device or in combination with the instruction execution system, apparatus, or device. In the disclosure, the computer-readable signal medium may include a data signal propagating in a baseband or as part of a carrier wave, which carries computer-readable program codes. Such a data signal propagating may take various forms, including, but not limited to, an electromagnetic signal, an optical signal, or any suitable combination of the above. The computer-readable signal medium may further be any computer-readable medium apart from the computer-readable storage medium, and the computer-readable signal medium may send, propagate, or transmit programs used by the instruction execution system, apparatus, or device or in combination with the instruction execution system, apparatus, or device. The program codes included on the computer-readable signal medium may be transmitted by using any suitable medium, including, but not limited to, wire, optical cable, radio frequency (RF), etc., or any suitable combination of the above.

In some embodiments, a client and a server may communicate by utilizing any currently known or future developed network protocol such as a hyperText transfer protocol (HTTP), and may interconnect with digital data communication (for example, communication network) in any form or medium. An example of the communication network includes a local area network ("LAN"), a wide area network ("WAN"), an internet work (for example, the Internet), an end-to-end network (such as an ad hoc end-to-end network), as well as any currently known or future developed network.

The above computer storage medium may be included in the above electronic device, or exist separately without being assembled into the electronic device.

The above computer storage medium carries one or more programs. When executed by the electronic device, the one or more programs cause the electronic device to execute the following steps:
a plurality of types of effect items corresponding to a viewing trigger operation are determined in response to the viewing trigger operation for effect items; and
an effect tag corresponding to each type of effect item is obtained, and the effect tag is displayed, where a tag display mode of the effect tag is associated with an effect action position of the effect item corresponding to the effect tag in an effect application image.

Alternatively, the above computer storage medium carries one or more programs. When executed by the electronic device, the one or more programs cause the electronic device to execute the following steps:
a plurality of types of effect items corresponding to a viewing trigger operation are determined in response to the viewing trigger operation for effect items; and
an effect tag corresponding to each type of effect item is obtained, and the effect tag is displayed, where a tag display mode of the effect tag is associated with an effect action position of the effect item corresponding to the effect tag in an effect application image.

Computer program codes configured to execute operations of the disclosure may be written in one or more programming languages or a combination of the programming languages. The above programming languages include, but not limited to, object-oriented programming languages such as Java, Smalltalk and C++, and further include conventional procedural programming languages such as "C" programming language or similar programming languages. The program codes may be executed entirely on a user computer, executed partially on the user computer, executed as a stand-alone software package, executed partially on the user computer and partially on a remote computer, or executed entirely on the remote computer or a server. Where the remote computer is involved, the remote computer may be connected to the user computer by means of any kind of network, including the LAN or the WAN, or may be connected to an external computer (for example, the remote computer is connected by means of the Internet by an Internet service provider).

Flow diagrams and block diagrams in the accompanying drawings illustrate system structures, functions and operations, which may be implemented according to systems, methods and computer program products in various examples of the disclosure. In this regard, each block in the flow diagrams or the block diagrams may represent a module, a program segment, or part of codes, which may include one or more executable instructions configured to implement logical functions specified. It should also be noted that in some alternative implementations, functions noted in the blocks may also occur in sequences different from those in the accompanying drawings. For example, the functions represented by two continuous blocks may be actually implemented basically in parallel, and sometimes executed in reverse sequences, which depends on the involved functions. It should also be noted that each block in the block diagrams and/or the flow diagrams, and combinations of the blocks in the flow diagrams and/or the block diagrams, may be implemented by using dedicated hardware-based systems that implement the specified functions or operations, or may be implemented by using combinations of dedicated hardware and computer instructions.

The units described in the examples of the disclosure may be implemented in software or hardware. The names of the units do not constitute limitations to the units themselves in some cases. For example, a first acquisition unit may be further described as a "unit for obtaining at least two internet protocol addresses".

The functions described above herein may be at least partially executed by one or more hardware logic components. For example, non-restrictively, demonstration types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the disclosure, a machine-readable medium may be a tangible medium that may include or store a program for use by the instruction execution system, apparatus, or device or in combination with the instruction execution system, apparatus, or device. The machine-readable medium may be a computer-readable signal medium or a computer-readable storage medium. The machine-readable medium may include, but not limited to, an electronic, magnetic, optical, electromagnetic, infrared, or semiconductor system, apparatus, or device, or any suitable combination of the above. More specific examples of the machine-readable storage medium may include an electrically connected and portable computer diskette based on one or more wires, a hard disk, a RAM, a ROM, an EPROM or a flash memory, an optical fiber, a portable CD-ROM, an optical storage device, a magnetic storage device, or any suitable combination of the above.

According to one or more examples of the disclosure, a method for displaying effect information is provided in [Example 1]. The method includes:
a plurality of types of effect items corresponding to a viewing trigger operation are determined in response to the viewing trigger operation for effect items; and
an effect tag corresponding to each type of effect item is obtained, and the effect tag is displayed, where a tag display mode of the effect tag is associated with an effect action position of the effect item corresponding to the effect tag in an effect application image.

According to one or more examples of the disclosure, the method of Example 1 is provided in [Example 2].

Alternatively, the step that the effect tag is displayed includes:
the effect action position of each type of effect item in the effect application image is determined;
a tag display position and/or a tag display form corresponding to each effect tag are/is determined based on the effect action position; and
the effect tag is displayed based on the tag display position and/or the tag display form corresponding to the effect tag.

According to one or more examples of the disclosure, the method of Example 2 is provided in [Example 3].

Alternatively, the step that the effect action position of each type of effect item in the effect application image is determined includes:
a spatial display position when the effect item is applied to the effect application image is determined for each type of effect item; and
the effect action position of the effect item in the effect application image is determined based on the spatial display position corresponding to the effect item.

According to one or more examples of the disclosure, the method of Example 2 is provided in [Example 4].

Alternatively, the effect action position includes an effect display depth; and the step that a tag display position corresponding to each effect tag is determined based on the effect action position includes:
position arrangement information of the tag display position corresponding to the effect tag is determined for each effect tag based on depth distribution information of the effect display depth corresponding to the effect tag.

According to one or more examples of the disclosure, the method of Example 1 is provided in [Example 5].

Alternatively, the method further includes: a selection operation acting on the effect tag is received, a tag display form of a selected effect tag is switched from a first display state to a second display state for display, and item detail information of the effect item corresponding to the effect tag is displayed.

According to one or more examples of the disclosure, the method of Example 5 is provided in [Example 6].

Alternatively, the step that a tag display form of a selected effect tag is switched from a first display state to a second display state for display includes:
first state attribute information corresponding to the first display state of the selected effect tag and second state attribute information corresponding to the second display state of the selected effect tag are determined; and
based on the first state attribute information and the second state attribute information, the tag display form of the selected effect tag is switched from the first display state to the second display state for display.

According to one or more examples of the disclosure, the method of Example 6 is provided in [Example 7].

Alternatively, the step that based on the first state attribute information and the second state attribute information, the tag display form of the selected effect tag is switched from the first display state to the second display state for display includes:
one or more pieces of intermediate state attribute information is determined based on a preset animation model and the first state attribute information, where the first state attribute information includes rotation information, translation information and size information; and
the first state attribute information is updated to the second state attribute information from the intermediate state attribute information, so as to switch the tag display form of the selected effect tag from the first display state to the second display state for display.

According to one or more examples of the disclosure, the method of Example 5 is provided in [Example 8].

Alternatively, the method further includes: the effect tag is switched from the second display state back to the first display state in response to the effect tag is switched from a selected state to an unselected state.

According to one or more examples of the disclosure, the method of Example 5 is provided in [Example 9].

Alternatively, the method further includes: a target display form of the effect tag is determined determining for an unselected effect tag according to a distance between the effect tag and the selected effect tag, and the effect tag is displayed in the target display form.

According to one or more examples of the disclosure, the method of Example 5 is provided in [Example 10].

Alternatively, the step that a selection operation acting on the effect tag is received includes at least one of the following operations:
a hovering operation of a cursor of an input device hovering over the effect tag is received;
a continuous stay operation of a touch point on the effect tag is received, where the continuous stay operation is an operation in which a duration of continuous stay reaches a preset duration threshold; and
a click operation for the effect tag is received.

According to one or more examples of the disclosure, the method of Example 5 is provided in [Example 11].

Alternatively, the first display state is a collapsed display state, and the second display state is an expanded display state; and/or the first display state is a first shape, and the second display state is a second shape.

According to one or more examples of the disclosure, an apparatus for displaying effect information is provided in [Example 12]. The apparatus includes:
an effect item determination module, configured to determine, in response to a viewing trigger operation for an effect item, a plurality of types of effect items corresponding to the viewing trigger operation; and
an effect tag display module, configured to obtain an effect tag corresponding to each type of the effect item, and display the effect tag, where a tag display mode of the effect tag is associated with an effect action position of effect item corresponding to the effect tag in an effect application image.

What are described above are merely for illustration of the preferred examples of the disclosure and the technical principles used. It should be understood by those skilled in the art that the disclosed scope involved in the disclosure is not limited to the technical solution formed by a specific combination of the technical features described above, and should also cover other technical solutions formed by any combination of the technical features described above or equivalent features of the technical features without departing from the disclosed concept described above, for example, the technical solution formed by replacing the above-mentioned features with the technical features having similar functions disclosed in (but not limited to) the disclosure.

Furthermore, although each operation is described in a specific order, this should not be understood as requiring the operations to be executed in the specific order shown or in a sequential order. In a certain environment, multitasking and parallel processing may be advantageous. Similarly, although several specific implementation details are included in the above discussion, these details should not be interpreted as limiting the scope of the disclosure. Some features described in the context of a single example can further be implemented in a single example in a combined mode. On the contrary, various features described in the context of a single example can also be implemented in multiple examples separately or in an any suitable sub-combination mode.

Although the subject matter has been described in language specific to structural features and/or method logical actions, it should be understood that the subject matter defined in the appended claims may not necessarily be limited to the specific features or actions described above. On the contrary, the specific features and actions described above are merely exemplary forms to implement the claims.

## Claims

1. A method for displaying effect information, comprising:
determining, in response to a viewing trigger operation for effect items, a plurality of types of effect items corresponding to the viewing trigger operation; and
obtaining an effect tag corresponding to each type of effect item, and displaying the effect tag, wherein a tag display mode of the effect tag is associated with an effect action position of the effect item corresponding to the effect tag in an effect application image.

2. The method for displaying effect information according to claim 1, wherein displaying the effect tag comprises:
determining the effect action position of each type of effect item in the effect application image respectively;
determining, based on the effect action position, a tag display position and/or a tag display form corresponding to each effect tag; and
displaying the effect tag based on the tag display position and/or the tag display form corresponding to the effect tag.

3. The method for displaying effect information according to claim 2, wherein determining the effect action position of each type of effect item in the effect application image respectively comprises:
determining, for each type of effect item, a spatial display position when the effect item is applied to the effect application image; and
determining, based on the spatial display position corresponding to the effect item, the effect action position of the effect item in the effect application image.

4. The method for displaying effect information according to claim 2, wherein the effect action position comprises an effect display depth; and determining, based on the effect action position, a tag display position corresponding to each effect tag comprises:
determining, for each effect tag, position arrangement information of the tag display position corresponding to the effect tag based on depth distribution information of the effect display depth corresponding to the effect tag.

5. The method for displaying effect information according to claim 1, further comprising:
receiving a selection operation acting on the effect tag, switching a tag display form of a selected effect tag from a first display state to a second display state for display, and displaying item detail information of the effect item corresponding to the effect tag.

6. The method for displaying effect information according to claim 5, wherein switching the tag display form of the selected effect tag from the first display state to the second display state for display comprises:
determining first state attribute information corresponding to the first display state of the selected effect tag and second state attribute information corresponding to the second display state of the selected effect tag; and
switching, based on the first state attribute information and the second state attribute information, the tag display form of the selected effect tag from the first display state to the second display state for display.

7. The method for displaying effect information according to claim 6, wherein switching, based on the first state attribute information and the second state attribute information, the tag display form of the selected effect tag from the first display state to the second display state for display comprises:
determining one or more pieces of intermediate state attribute information based on a preset animation model and the first state attribute information, wherein the first state attribute information comprises rotation information, translation information and size information; and
updating the first state attribute information to the second state attribute information via the intermediate state attribute information, to switch the tag display form of the selected effect tag from the first display state to the second display state for display.

8. The method for displaying effect information according to claim 5, further comprising:
switching the effect tag from the second display state back to the first display state in response to the effect tag being switched from a selected state to an unselected state.

9. The method for displaying effect information according to claim 5, further comprising:
determining, for an unselected effect tag, a target display form of the effect tag according to a distance between the effect tag and the selected effect tag, and displaying the effect tag in the target display form.

10. The effect information display method according to claim 5, wherein receiving the selection operation acting on the effect tag comprises at least one of the following operations:
receiving a hovering operation of a cursor of an input device hovering over the effect tag;
receiving a continuous stay operation of a touch point on the effect tag, wherein the continuous stay operation is an operation in which a duration of continuous stay reaches a preset duration threshold; and
receiving a click operation for the effect tag.

11. The method for displaying effect information according to claim 5, wherein the first display state is a collapsed display state, and the second display state is an expanded display state; and/or the first display state is a first shape, and the second display state is a second shape.

12. An apparatus for displaying effect information, comprising:
an effect item determination module, configured to determine, in response to a viewing trigger operation for an effect item, a plurality of types of effect items corresponding to the viewing trigger operation; and
an effect tag display module, configured to obtain an effect tag corresponding to each type of the effect item, and display the effect tag, wherein a tag display mode of the effect tag is associated with an effect action position of effect item corresponding to the effect tag in an effect application image.

13. The apparatus for displaying effect information according to claim 12, wherein displaying the effect tag comprises:
determining the effect action position of each type of effect item in the effect application image respectively;
determining, based on the effect action position, a tag display position and/or a tag display form corresponding to each effect tag; and
displaying the effect tag based on the tag display position and/or the tag display form corresponding to the effect tag.

14. The apparatus for displaying effect information according to claim 13, wherein determining the effect action position of each type of effect item in the effect application image comprises:
determining, for each type of effect item, a spatial display position when the effect item is applied to the effect application image; and
determining, based on the spatial display position corresponding to the effect item, the effect action position of the effect item in the effect application image.

15. The apparatus for displaying effect information according to claim 13, wherein the effect action position comprises an effect display depth; and determining, based on the effect action position, the tag display position corresponding to each effect tag comprises:
determining, for each effect tag, position arrangement information of the tag display position corresponding to the effect tag based on depth distribution information of the effect display depth corresponding to the effect tag.

16. The apparatus for displaying effect information according to claim 12, further comprising:
receiving a selection operation acting on the effect tag, switching a tag display form of a selected effect tag from a first display state to a second display state for display, and displaying item detail information of the effect item corresponding to the effect tag.

17. The apparatus for displaying effect information according to claim 16, wherein switching the tag display form of the selected effect tag from the first display state to the second display state for display comprises:
determining first state attribute information corresponding to the first display state of the selected effect tag and second state attribute information corresponding to the second display state of the selected effect tag; and
switching, based on the first state attribute information and the second state attribute information, the tag display form of the selected effect tag from the first display state to the second display state for display.

18. The apparatus for displaying effect information according to claim 17, wherein switching, based on the first state attribute information and the second state attribute information, the tag display form of the selected effect tag from the first display state to the second display state for display comprises:
determining one or more pieces of intermediate state attribute information based on a preset animation model and the first state attribute information, wherein the first state attribute information comprises rotation information, translation information and size information; and
updating the first state attribute information to the second state attribute information via the intermediate state attribute information, to switch the tag display form of the selected effect tag from the first display state to the second display state for display.

19. An electronic device, comprising:
one or more processors; and
a storage apparatus, configured to store one or more programs, wherein
when the one or more programs are executed by the one or more processors, causing the one or more processors to perform the method for displaying effect information according to any of claims 1-11.

20. A storage medium comprising computer-executable instructions, when the computer-executable instructions executed by a computer processor, causing the computer processor to perform the method for displaying effect information according to any of claims 1-11.
